Europäisches Patentamt

**European Patent Office**

**Office européen des brevets**

(19)

(11) Veröffentlichungsnummer : **0 058 301
B1**

(12)

# EUROPÄISCHE PATENTSCHRIFT

(45) Veröffentlichungstag der Patentschrift :
28.11.84

(21) Anmeldenummer : **82100321.7**

(22) Anmeldetag : **18.01.82**

(51) Int. Cl.³ : **C 08 F   8/22**, C 08 F   6/12,
**C 08 C   2/06**

(54) **Verfahren zur Herstellung wasserbeständiger, filmbildender, chlorierter Polymerer.**

(30) Priorität : **27.01.81 DE 3102511**

(43) Veröffentlichungstag der Anmeldung :
**25.08.82 Patentblatt 82/34**

(45) Bekanntmachung des Hinweises auf die Patenterteilung : **28.11.84 Patentblatt 84/48**

(84) Benannte Vertragsstaaten :
**DE FR GB IT**

(56) Entgegenhaltungen :
**DE-A- 2 701 288
DE-A- 2 818 647
FR-A- 2 359 155**

(73) Patentinhaber : **BAYER AG
Konzernverwaltung RP Patentabteilung
D-5090 Leverkusen 1 Bayerwerk (DE)**

(72) Erfinder : **Alfes, Franz, Dr.
Kruse Boemke 7
D-4150 Krefeld-Verberg (DE)**
Erfinder : **Perrey, Hermann, Dr.
Auf der Rheinaue 8
D-4150 Krefeld (DE)**
Erfinder : **Meyer, Karl-Heinrich, Dr.
Deswatinesstrasse 89
D-4150 Krefeld-Bockum (DE)**
Erfinder : **Heine, Diez
Alkenrather Strasse 15
D-5090 Leverkusen 1 (DE)**
Erfinder : **Kowitz, Friedrich, Dr.
Friedrich-Ebert-Strasse 44
D-4047 Dormagen 1 (DE)**

EP 0 058 301 B1

0 058 301

## Beschreibung

Die Erfindung betrifft ein Verfahren zur Herstellung filmbildender, chlorierter Polymerer, die als Lackfilme außerordentlich wasserbeständig sind.

Aliphatische Polymere wie Naturkautschuk, Polyisopren, Polybutadien, Polyethylen, Polypropylen und Polyethylenpropylen-Mischpolymerisate kann man chlorieren, indem man gasförmiges Chlor in eine Lösung des Polymeren in einem chlorbeständigen organischen Lösungsmittel, z. B. bei 60 bis 120 °C, einleitet. Das übliche chlorbeständige Lösungsmittel ist Tetrachlorkohlenstoff, der sich zwar besonders gut eignet, aber aus Gründen der Ökologie besondere Vorsichtsmaßnahmen erfordert. Aus der Lösung des Polymeren im chlorbeständigen organischen Lösungsmittel kann man nach Abschluß der Chlorierung das Polymer in fester Form zurückgewinnen, indem man das Gemisch mit heißem Wasser oder Dampf behandelt. Ein Teil des verwendeten organischen Lösungsmittels destilliert dabei ab, das chlorierte Polymere fällt aus kann abfiltriert werden. Das primär erhaltene Produkt enthält dann etwa 30 bis etwa 60 Gew.-% Wasser, neben erheblichen Restmengen des organischen Lösungsmittels. Auch durch Trocknen dieses Produktes im Vakuum oder im Gasstrom wird das organische Lösungsmittel nicht vollständig entfernt, es bleiben beispielsweise 5 bis 10 Gew.-Teile organisches Lösungsmittel auf 100 Gew.-Teile des chlorierten Polymeren (vgl. DE-OS 2 359 461 = US-PS 4 144 203).

Zur Verwendung als Anstrichmittel löst man die chlorierten Polymere in einem gebräuchlichen Lacklösungsmittel, beispielsweise Toluol ; dabei gelangen auch die noch vorhandenen Restmengen des zur Chlorierung verwendeten Lösungsmittels, vorwiegend chlorierte Kohlenwasserstoffe, in die Lösung und verdunsten beim Anstrich. Um dies zu vermeiden, muß man den Restgehalt an zur Chlorierung benutztem Lösungsmittel in den für Anstrichzwecke verwendeten chlorierten Polymeren reduzieren.

Es ist bekannt, (vgl. DE-OS 27 01 288 = US-PS 4 122 249), bei der Behandlung der Lösung des chlorierten Polymeren im chlorbeständigen organischen Lösungsmittel mit heißem Wasser oder Dampf der Lösung eine geringe Gewichtsmenge eines aliphatischen Alkohols mit mindestens 8, vorzugsweise 12 Kohlenstoffatomen zuzusetzen, um den Restgehalt an zur Chlorierung benutztem Lösungsmittel in dem chlorierten Polymeren zu reduzieren. Dieses Verfahren besitzt aber den Nachteil, daß das ausgefällte Produkt dazu neigt, an den Wandungen des Ausfällbehälters zu haften. Darüber hinaus erscheint eine weitere Reduzierung des Restlösungsmittelgehaltes wünschenswert (vgl. auch DE-OS 2 559 461).

Verbesserte Ergebnisse erhält man (vgl. DE-OS 28 18 647 = US-PS 4 172 104) bei der Behandlung der Lösung des chlorierten Polymeren im chlorbeständigen organischen Lösungsmittel mit heißem Wasser oder Dampf in Gegenwart einer geringen Gewichtsmenge eines Oxethylierungsproduktes aus einem Mol eines primären aliphatischen Monoalkohols mit mindestens 8 Kohlenstoffatomen und 2-20 Mol Ethylenoxid.

Das Oxethylierungsprodukt verbleibt zu 70-80 % im chlorierten Polymeren.

Von großem Nachteil ist dabei, daß die chlorierten Polymeren, die unter Verwendung oxethylierter aliphatischer Alkohole gefällt wurden, als Lackfilme eine schlechtere Wasserfestigkeit aufweisen als entsprehende Filme von chlorierten Polymeren ohne Additive.

Aufgabe der vorliegenden Erfindung war die Bereitstellung eines Verfahrens zur Herstellung chlorierter, filmbildender Polymerer, die als Lackfilme eine hoche Wasserbeständigkeit aufweisen.

Die Aufgabe wurde dadurch gelöst, daß nach der Chlorierung des filmbildenden Polymeren in Chlorkohlenwasserstofflösung das Lösungsmittel mit Wasserdampf und/oder heißem Wasser in Gegenwart einer geringen Menge eines Oxpropylierungsproduktes aus einem Mol eines primären aliphatischen Alkohols mit mindestens 8 Kohlenstoffatomen und 2 bis 10 Mol Propylenoxid, gegebenenfalls in zusätzlicher Anwesenheit eines Chlorparaffins der Kettenlänge $C_8$-$C_{22}$ und mit einem Chlorgehalt von 40-70 Gew.-%, entfernt wurde.

Es muß als außerordentlich überraschend gewertet werden, daß nach dem Verfahren der Erfindung filmbildende, chlorierte Polymere erhalten werden, die als Lackfilm eine höhere Wasserbeständigkeit aufweisen als Filme von den gleichen, ohne Zusatz eines Hilfsmittels hergestellten, filmbildenden, chlorierten Polymeren. Erwarwartet werden konnte aufgrund der geringeren Hydrophilie der Propoxygruppen gegenüber Ethoxygruppen allenfalls eine gewisse Verbesserung der Wasserbeständigkeit gegenüber filmbildenden, chlorierten Polymeren, die in Gegenwart von oxethylierten Alkoholen gemäß DE-OS 2 818 647 erhalten wurden.

Gegenstand der Erfindung ist somit ein Verfahren zur Herstellung wasserbeständige Filme ergebender, chlorierter Polymerer mit Chlorgehalten von 30-70 Gew.-% durch Chlorierung der Polymeren in mindestens einem Chlorkohlenwasserstoff als Lösungsmittel und Entfernen des Lösungsmittels mit Wasserdampf und/oder heißem Wasser in Gegenwart von mindestens 1 Gew.-%, bezogen auf chloriertes Polymer, eines Oxalkylierungsproduktes aus 1 Mol eines primären aliphatischen Alkohols mit mindestens 8 Kohlenstoffatomen und 2 bis 10 Mol eines Alkylenoxids und Trocknen des ausgefällten chlorierten Polymeren, dadurch gekennzeichnet, daß als Oxalkylierungsprodukt ein Oxpropoxylierungsprodukt aus den angegebenen Alkoholen und Propylenoxid eingesetzt wird.

Gegenstand der Erfindung sind auch die nach dem erfindungsgemäßen Verfahren erhaltenen Gemische aus chloriertem Polymer und den beschriebenen Propoxylierungsprodukten.

Als Polymere für die Chlorierung kommen beispielsweise aliphatische Polymere wie Naturkautschuk,

2

Polyisopren, Polybutadien, Polyethylen, Polypropylen, Ethylen-Propylen/Copolymerisate oder deren Mischungen in Frage.

Unter Chlorkohlenwasserstoffen werden beispielsweise Tetrachlorkohlenstoff, Trichlorethylen, Chloroform, Tetrachlorethan, Methylenchlorid oder deren Mischungen verstanden.

Die Oxpropylierungsprodukte, die beim erfindungsgemäßen Verfahren zum Einsatz gelangen, sind Additionsprodukte von 1 Mol eines primären, aliphatischen Alkohols mit mindestens 8 Kohlenstoffatomen, vorzugsweise 12-18 Kohlenstoffatomen, und 2 bis 10 Mol Propylenoxid.

Die Herstellung der Oxpropylierungsprodukte erfolgt nach bekannten Verfahren, beispielsweise gemäß Houben-Weyl, Methoden der Organischen Chemie, Band XIV/2 S. 425 ff.

Das Oxpropylierungsprodukt kann der Lösung des chlorierten Polymeren vor oder während des Behandlung mit Wasserdampf oder heißem Wasser zugegeben werden. Die Menge an zugesetztem Oxpropylierungsprodukt beträgt mindestens 1 Gew.-%, vorzugsweise 2-10 Gew.-%, bezogen auf chloriertes, lösungsmittelfreies Polymer.

Falls gewünscht, kann das Oxpropylierungsprodukt in Kombination mit mindestens einem chlorierten Paraffin mit 8-22 Kohlenstoffatomen und einem Chlorgehalt von 30-70 Gew.-% eingesetzt werden. Die zugesetzte Menge an chloriertem Paraffin kann, bezogen auf chloriertes Polymer, 1-10 Gew.-% betragen. Die Gesamtmenge der Mischung aus Oxpropylierungsprodukt und chloriertem Paraffin kann demnach, bezogen auf chloriertes Polymer, 2-20 Gew.-% betragen.

Die Herstellung des chlorierten Polymeren sowie das Abtrennen der eingesetzten organischen, chlorbeständigen Lösungsmittel mit Wasserdampf und/oder heißem Wasser erfolgt nach bekannten Verfahren, beispielsweise gemäß DE-OS 2 359 461.

Die erfindungsgemäß erhaltenen chlorierten Polymeren stellen Gemische aus 90-99 Gew.-% chlorierten Polymeren und 1-10 Gew.-% Propoxylierungsprodukten der definierten Art dar. Im Falle der Mitverwendung chlorierter Paraffine besteht das Gemisch aus 80-98 Gew.-% chloriertem Polymer und 2-20 Gew.-% Propoxylierungsprodukt und chloriertem $C_8$-$C_{22}$-Paraffin.

Die erfindungsgemäß erhaltenen chlorierten Polymere weisen eine hervorragende Wasserbeständigkeit auf und finden als Anstrichmittel für Unterwasser-Rostschutz- und Säureschutzanstriche Verwendung.

Die in den Beispielen angegebenen Prozentangaben beziehen sich auf das Gewicht, sofern nicht anders angegeben.

## Beispiel 1

100 Gew.-Teile lösliches cis-1,4-Polyisopren werden in 1 740 Gew.-Teilen Tetrachlorkohlenstoff aufgelöst. In die Lösung wird bei 65 bis 80 °C Chlorgas eingeleitet, bis der Chlorgehalt in einer Probe des chlorierten Polymeren 66 % beträgt. Anschließend werden Chlor und Chlorwasserstoff durch Spülen mit Stickstoff entfernt.

Zu dieser Lösung, die 260 Gew.-Tle chloriertes Polymeres enthält, werden 10,4 Gew.-Teile eines oxpropylierten Laurylalkohols gegeben, der pro Mol OH zwei Propoxygruppen enthält. Man verrührt 5 Minuten bei 40 °C, bis sich der oxpropylierte Laurylalkohol klar gelöst hat, und düst anschließend die Lösung mit einem Vordruck von 50 bar durch eine Nebeldüse (Durchmesser 0,1 mm) unter Rühren in 95 °C heißes Wasser. Nach 15 Minuten ist die Zugabe beendet. Man beläßt das ausgefällte chlorierte Polymere ca. 1 Stunde unter Rühren bei 95 °C im Fällgefäß, wobei durch bei Aufschlämmung Dampf geleitet wird.

Das ausgefällte chlorierte Polymere wird dann abfiltriert und bei 80 °C 24 Stunden im Vakuumtrockenschrank getrocknet. Der Rest-Tetrachlorkohlenstoffgehalt des getrockneten chlorierten Polymeren beträgt 0,2 %. Das chlorierte Polymere enthält 3,2 % an oxpropyliertem Laurylalkohol.

In der folgenden Tabelle I sind die Daten weiterer Polymerer, die auf die gleiche Weise gemäß Beispiel 1 hergestellt wurden, aufgeführt :

(Siehe Tabelle I Seite 4 f.)

# 0 058 301

Tabelle I

| Beispiel | Chloriertes Polymeres, hergestellt aus | % Cl | Verwendetes Oxpropylierungsprodukt | | CCl$_4$-Rest-gehalt im Polymer | % Oxpropylierungs-produkt in Polymer |
| | | | Alkohol | Durchschnittliche Zahl der Propoxy-Einheiten pro Mol Alkohol | | |
|---|---|---|---|---|---|---|
| 1a | Mischung aus 70 % cis-1,4-Poly-isopren und 30 % Polybutadien | 65,8 | Fettalkoholgemisch aus 2 % C$_{14}$-, 51 % C$_{16}$-, 28 % C$_{18}$-, 14 % C$_{20}$- und 5 % C$_{22}$-Alkohol | 2,8 | 0,5 % | 3,3 |
| 1b | " | 65,8 | Technisches Fett-alkoholgemisch C$_{12}$-C$_{18}$ | 4,2 | 0,5 % | 3,4 |
| 1c | " | 65,8 | Myristylalkohol | 5,0 | 0,5 % | 3,2 |
| 1d | " | 65,8 | Cetylalkohol | 2,0 | 0,5 % | 3,2 |
| 1e | " | 65,8 | Stearylalkohol | 2,0 | 0,5 % | 3,5 |
| 1f | " | 65,8 | Oleylalkohol | 3,0 | 0,5 % | 3,5 |
| 1g | Naturkautschuk mit 0,9 % N | 67,5 | Fettalkoholgemisch aus 2 % C$_{14}$-, 51 % C$_{16}$-, 28 % C$_{18}$-, 14 % C$_{20}$- und 5 % C$_{22}$-Alkohol | 9,8 | 0,9 % | 3,2 |
| 1h | isotaktisches Polyethylen | 64,0 | " | 3,0 | 0,5 % | 3,0 |
| 1i | isotaktisches Polypropylen | 65 | " | 3,0 | 0,5 % | 3,0 |

Aus Tabelle II sind die Wasserbeständigkeiten von Filmen der chlorierten Polymeren des Beispiels 1-1i ersichtlich. Zum Vergleich sind die Wasserbeständigkeiten von Filmen der chlorierten Polymeren des Beispiels 1-1i, frei von Oxpropylierungsprodukten, gegenübergestellt. Ferner wurde Beispiel 1 vorliegender Anmeldung wiederholt mit der Änderung, daß anstelle des oxpropylierten Laurylalkohols die gleiche Menge oxethylierter Laurylalkohol (pro Mol OH durchschnittlich 2 Ethoxygruppen) eingesetzt wurde und die Wasserbeständigkeit von Filmen der resultierenden chlorierten Polymeren festgestellt. Derartige Produkte werden gemäß DE-OS 28 18 647 erhalten. Schließlich wurde die Wasserfestigkeit von Filmen mit chlorierten Polymeren gemäß Beispiel 1 vorliegender Anmeldung, jedoch mit der Änderung, daß statt des Oxpropylierungsproduktes Polypropylenenglykol gemäß DE-OS 23 59 461, Seite 4, Zeile 10 (M = ca. 500) im chlorierten Polymeren enthalten ist, in Tabelle II aufgenommen.

Die Herstellung der Lackfilme erfolgte wie folgt :

Eine Mischung aus 35 Gew.-Tln Titandioxid-Pigment, 19,5 Gew.-Tln Chlorkautschuk und 45,5 Gew.-Tln Xylol wird auf dem Dreiwalzenstuhl angerieben. Mit einer Spritzpistole wird der Lack auf vorher entfettete Stahlbleche in zwei Spritzgängen mit einer Naßschichtdicke von 130-140 $\mu$m aufgetragen. Anschließend werden die Bleche 14 Tage bei 20 °C und einer relativen Luftfeuchte von 50 % getrocknet. Die Trockenschichtdicke beträgt dann etwa 80 $\mu$m. Die so vorbehandelten Bleche werden in Trinkwasser bei 40 °C gelagert.

Die Ergebnisse sind in der folgenden Tabelle zusammengefaßt :

Tabelle II

| Film aus Produkt gemäß | Gehalt in % an [1] | | Wasserbeständigkeit |
| | Oxypropylie-rungsprodukt | Oxyethylie-rungsprodukt | |
| --- | --- | --- | --- |
| Beispiel 1 (Erfindung) | 3,2 | — | nach 32 Tagen unverändert |
| Beispiel 1 (Vergleich) | — | — | nach 18 Tagen Blasenbildung mit Unterrostung |
| Beispiel 1 (Vergleich) | — | 3,2 | nach 9 Tagen Blasenbildung mit Unterrostung |
| Beispiel 1 (Vergleich) | 3,2 PPG [2] | — | nach 10 Tagen Blasenbildung mit Unterrostung |
| Beispiel 1a (Erfindung) | 3,3 | — | nach 32 Tagen unverändert |
| Beispiel 1a (Vergleich) | — | — | nach 18 Tagen Blasenbildung mit Unterrostung |
| Beispiel 1b (Erfindung) | 3,4 | — | nach 32 Tagen unverändert |
| Beispiel 1b (Vergleich) | — | — | nach 18 Tagen Blasenbildung mit Unterrostung |
| Beispiel 1c (Erfindung) | 3,2 | — | nach 32 Tagen unverändert |
| Beispiel 1c (Vergleich) | — | — | nach 18 Tagen Blasenbildung mit Unterrostung |
| Beispiel 1d (Erfindung) | 3,2 | — | nach 32 Tagen unverändert |
| Beispiel 1d (Vergleich) | — | — | nach 18 Tagen Blasenbildung mit Unterrostung |
| Beispiel 1e (Erfindung) | 3,5 | — | nach 32 Tagen unverändert |
| Beispiel 1e (Vergleich) | — | — | nach 18 Tagen Blasenbildung mit Unterrostung |
| Beispiel 1f (Erfindung) | 3,5 | — | nach 32 Tagen unverändert |
| Beispiel 1f (Vergleich) | — | — | nach 18 Tagen Blasenbildung mit Unterrostung |
| Beispiel 1g (Erfindung) | 3,2 | — | nach 32 Tagen unverändert |
| Beispiel 1g (Vergleich) | — | — | nach 18 Tagen Blasenbildung mit Unterrostung |
| Beispiel 1h (Erfindung) | 3,0 | — | nach 30 Tagen unverändert |
| Beispiel 1h (Vergleich) | — | — | nach 18 Tagen Blasenbildung mit Unterrostung |
| Beispiel 1i (Erfindung) | 3,0 | — | nach 50 Tagen unverändert |
| Beispiel 1i (Vergleich) | — | — | nach 38 Tagen Blasenbildung mit Unterrostung |

[1] Ethoxylierter Laurylalkohol mit etwa 2 Mol Ethylenoxideinheiten je Mol Alkohol gemäß DE-OS 2 818 647.
[2] Polypropylenglykol gemäß DE-OS 2 359 461.

Beispiel 2

70 Gew.-Teile lösliches cis-1,4-Polyisopren und 30 Gew.-Teile Polybutadien werden in 1 740 Gew.-Teilen Tetrachlorkohlenstoff aufgelöst. In die Lösung wird bei 65 °C bis 80 °C Chlorgas eingeleitet, bis der Chlorgehalt in einer Probe des chlorierten Polymeren 66 % beträgt. Anschließend werden Chlor und Chlorwasserstoff durch Spülen mit Stickstoff entfernt. Diese Lösung wird mit einem Vordruck von 60 bar durch eine Nebeldüse mit einem Durchmesser von 0,1 mm unter Rühren in 95 °C heißes Wasser eindosiert. Nach beendeter Zugabe beläßt man das ausgefällte chlorierte Polymere 1 Stunde unter Rühren und Einblasen von Dampf im Fällgefäß. Dann werden zu der wäßrigen Suspension des ausgefällten chlorierten Polymeren eine Mischung von 5,2 Gew.-Teilen eines oxpropylierten Laurylalkohols mit durchschnittlich 3 Propoxygruppen pro Molekül Alkohol und 7,8 Gew.-Teile eines Chlorparaffins der Kettenlänge $C_{12}$ bis $C_{18}$ mit 42 % Chlor gegeben und 1 Stunde unter Rühren bei 95 °C Dampf eingeblasen. Das ausgefällte chlorierte Polymere wird dann abfiltriert und bei 80 °C 24 Stunden im Vakuumtrockenschrank getrocknet. Der Rest-Tetrachlorkohlenstoffgehalt des getrockneten chlorierten Polymeren betrug 0,1 % und der Gehalt an oxypropyliertem Laurylalkohol 3,5 %.

Die Herstellung der Lackfilme erfolgte gemäß den Angaben in Beispiel 1. Bei der Lagerung der lackierten Bleche in Trinkwasser bei 40 °C wurden nach 35 Tagen keine Veränderungen festgestellt, während Vergleichsbleche ohne oxpropylierten Laurylalkohol und ohne Chlorparaffin bereits nach 18 Tagen Blasenbildung mit Unterrostung zeigten.

5

**0 058 301**

## Ansprüche

1. Verfahren zur Herstellung wasserbeständige Filme ergebender chlorierter Polymerer mit Chlorgehalten von 30-70 Gew.-% durch Chlorierung der Polymeren in mindestens einem Chlorkohlenwasserstoff als Lösungsmittel und Entfernen des Lösungsmittels mit Wasserdampf und/oder heißem Wasser in Gegenwart von mindestens 1 Gew.-%, bezogen auf chloriertes Polymer, eines Oxalkylierungsproduktes aus 1 Mol eines primären aliphatischen Alkohols mit mindestens 8 Kohlenstoffatomen und 2 bis 10 Mol eines Alkylenoxids und Trocknen des ausgefällten chlorierten Polymeren, dadurch gekennzeichnet, daß als Oxalkylierungsprodukt ein Propoxylierungsprodukt aus den angegebenen Alkoholen und Propylenoxid eingesetzt wird.

2. Verfahren nach Anspruch 1, dadurch gekennzeichnet, daß 2-20 Gew.-%, bezogen auf chloriertes Polymer, eines Gemisches aus dem Propoxylierungsprodukt nach Anspruch 1 und einem Chlorparaffin der Kettenlänge $C_8$-$C_{22}$ und 40-70 Gew.-% Chlorgehalt eingesetzt wird.

## Claims

1. Process for the production of chlorinated polymers which have chlorine contents of 30-70 % by weight and which form water-resistant films, by chlorinating the polymers in at least one chlorinated hydrocarbon as the solvent and removing the solvent using water vapour and/or hot water in the presence of at least 1 % by weight, based on the chlorinated polymer, of an alkoxylation product of 1 mole of a primary aliphatic alcohol containing at least 8 carbon atoms and 2 to 10 moles of an alkylene oxide and drying the chlorinated polymer precipitated, characterised in that the alkoxylation product used is a propoxylation product of the above mentioned alcohols and propylene oxide.

2. Process according to Claim 1, characterised in that 2-20 % by weight, based on the chlorinated polymer, of a mixture of the propoxylation product according to Claim 1 and a chlorinated paraffin having a chain length of $C_8$-$C_{22}$ and a chlorine content of 40-70 % by weight is used.

## Revendications

1. Procédé de production de polymères chlorés donnant des films résistants à l'eau, à teneurs en chlore de 30 à 70 % en poids, par chloration des polymères dans au moins un hydrocarbure chloré utilisé comme solvant et élimination du solvant avec de la vapeur d'eau et/ou de l'eau chaude en présence d'au moins 1 % en poids, par rapport au polymère chloré, d'un produit d'oxalkylation de 1 mole d'un alcool aliphatique primaire ayant au moins 8 atomes de carbone et de 2 à 10 moles d'un oxyde d'alkylène et séchage du polymère chloré précipité, caractérisé en ce qu'on utilise comme produit d'oxalkylation un produit de propoxylation des alcools indiqués et d'oxyde de propylène.

2. Procédé suivant la revendication 1, caractérisé en ce qu'on utilise 2 à 20 % en poids, par rapport au polymère chloré, d'un mélange du produit de propoxylation selon la revendication 1 et d'une paraffine chlorée à longueur de chaîne de 8 à 22 atomes de carbone et contenant 40 à 70 % en poids de chlore.